# EUROPÄISCHE PATENTANMELDUNG

(11) **EP 3 425 365 A1**
(43) Veröffentlichungstag der Anmeldung: **09.01.2019**
(21) Anmeldenummer: 18000562.1
(22) Anmeldetag: 27.06.2018
(51) Int. Cl.: G01M 3/28

(54) **LECKAGEMESSEINRICHTUNG**

(30) Priorität: 08.07.2017 DE 102017006498
(71) Anmelder: Diehl Metering GmbH, 91522 Ansbach (DE); Diehl Metering S.A.S., 68300 Saint-Louis (FR)
(72) Erfinder: Gessinger, Annabell, DE - 74523 Schwäbisch Hall (DE); Göbel, Johannes, DE - 75446 Wiernsheim (DE); Rebel, Dominik, DE - 75015 Bretten (DE); Reinle, Florian, DE - 75236 Kämpfelbach (DE); Galarraga Zapater, Esteban Nicolas, DE - 76131 Karlsruhe (DE); Öztürk, Semih, DE - 71642 Ludwigsburg (DE)
(74) Vertreter: Diehl Patentabteilung

(57) **Zusammenfassung**

Leckagemesseinrichtung zum Einsetzen in eine ein Fluid von einem Fluidzufluss zu wenigstens einem Verbraucher führende Rohrleitung (38), umfassend ein Sperrorgan (4) zum Sperren des Fluidflusses in wenigstens einer Fließrichtung, sowie eine Messeinheit (2) umfassend einen in einem Rohrabschnitt bewegbaren, vom Fluid druckbeaufschlagten Kolben (8) mit einer zugeordneten, die Kolbenbewegung erfassenden Messeinrichtung (14).

## Beschreibung

Die Erfindung betrifft eine Leckagemesseinrichtung zum Einsetzen in eine ein Fluid von einem Fluidzufluss zu wenigstens einem Verbraucher führende Rohrleitung.

In nahezu jedem Gebäude ist ein Rohrleitungssystem vorgesehen, über das von einer Versorgungsleitung zugeführtes Wasser zu einem oder mehreren Verbrauchern geführt werden kann. Ein solcher Verbraucher sind beispielsweise Zapfstellen wie beispielsweise Wasserhähne oder dergleichen. In das Rohrleitungssystem ist eine Zählereinrichtung geschaltet, die in unterschiedlichen Ausgestaltungen den Wasserverbrauch erfasst. Über ein solches Rohrleitungssystem kann aber nicht nur Wasser verteilt werden. Gerade in Industriegebäuden ist es oft erforderlich, andere Fluide zu entsprechenden Verbrauchern zu führen.

Grundsätzlich wird davon ausgegangen, dass ein solches Rohrleitungssystem natürlich dicht ist. Mitunter können sich aber sogenannte Mikrolecks ergeben, also Undichtigkeiten, aus denen das Wasser respektive Fluid nur sehr langsam austritt. Die Erfassung solcher Mikrolecks ist schwierig, da das austretende Volumen über die Zeit sehr gering ist und sich beispielsweise an der Zählereinrichtung keine nennenswerte Durchflusserfassung einstellt.

Der Erfindung liegt damit das Problem zugrunde, eine Leckagemesseinrichtung anzugeben, die demgegenüber verbessert ist und die Erfassung auch kleiner und kleinster Leckagen ermöglicht, gleichzeitig aber auch die Erfassung einer Fluidanforderung seitens eines Verbrauchers.

Zur Lösung des Problems ist erfindungsgemäß eine Leckageeinrichtung zum Einsetzen in eine ein Fluid von einem Fluidzufluss zu wenigstens einem Verbraucher führende Rohrleitung vorgesehen, umfassend ein Sperrorgan zum Sperren des Fluidflusses in wenigstens einer Fließrichtung, sowie eine Messeinheit umfassend einen in einem Rohrabschnitt bewegbaren, vom Fluid druckbeaufschlagten Kolben mit einer zugeordneten, die Kolbenbewegung erfassenden Messeinrichtung.

Die erfindungsgemäße Leckageeinrichtung zeichnet sich durch eine Kolbenspeichereinheit mit zugeordnetem Sperrorgan aus. Über das Sperrorgan ist es möglich, den Fluidfluss zu dem oder den Verbrauchern zu unterbrechen, was erforderlich ist, um eine Leckagemessung durchzuführen, da hierzu für eine entsprechende Messdauer der Fluidfluss zu dem oder den Verbrauchern gesperrt sein muss, mithin also ein geschlossenes Volumen vorliegt, in dem ein konstanter Druck gegeben ist. In diesem Volumen angeordnet respektive diesem Volumen zugeordnet ist erfindungsgemäß eine Kolbenspeichereinheit, die einen vom Fluid druckbeaufschlagten Kolben umfasst. Dieser Kolben befindet sich, abhängig vom nach Absperren des Fluidflusses in der Rohrleitung respektive dem abgesperrten Teilvolumen herrschenden Druck, in einer entsprechenden Ausgangsposition. Dem Kolben zugeordnet ist eine Messeinrichtung, die in der Lage ist, hochgenau eine etwaige Kolbenbewegung zu erfassen. Entweicht nun aufgrund eines Lecks oder Mikrolecks Fluid aus der Rohrleitung respektive dem der Kolbenspeichereinheit zugeordneten Volumen, so ändert sich aufgrund des Fluidabflusses der Druck innerhalb dieses Teilsystems, damit aber auch der den Kolben belastende Druck. Dies führt dazu, dass sich der Kolben bewegt. Diese Kolbenbewegung wird mit der Messeinrichtung erfasst. Im Fall eines Mikrolecks ist die Kolbenbewegung aufgrund der sehr geringen abfließenden Fluidmenge gering, sie kann jedoch mit der Messeinrichtung präzise erfasst werden, so dass durch kontinuierliche Erfassung einer etwaigen Kolbenbewegung hochgenau auch ein etwaiges Mikroleck sensiert werden kann.

Kommt es während der Prüfdauer zu einer bewussten Entnahme oder einem Zapfvorgang, indem beispielsweise ein Verbraucher einen Zapfhahn öffnet, so führt dies zu einer relativ schnellen Druckabnahme innerhalb des Systems respektive des Volumens und damit einer entsprechend schnellen Kolbenbewegung, die wiederum über die Messeinrichtung erfasst wird. Eine solche entsprechend schnelle Kolbenbewegung wird unmittelbar als Zapf- oder Entnahmewunsch interpretiert, keinesfalls aber als Leck. Handelt es sich beispielsweise bei dem Sperrorgan um ein steuerbares Ventil, so kann mit Erfassung einer solchen schnellen Kolbenbewegung seitens der Messeinrichtung über eine zugeordnete Steuerungs- oder Verarbeitungseinrichtung unmittelbar das Ventil angesteuert werden, um den Fluidfluss wieder freizugeben, so dass ein normaler Zapfvorgang erfolgen kann. Hierüber kann also gleichzeitig sichergestellt werden, dass trotz Absperren des Fluidflusses und Durchführung einer Leckagemessung während der Messdauer eine gewollte Fluidentnahme möglich ist, nachdem die Möglichkeit besteht, im Fall eines aktiv steuerbaren Sperrorgans dieses unmittelbar öffnen und den Fluidfluss freigeben zu können.

Die erfindungsgemäße Leckagemesseinrichtung mit der Kolbenspeichereinheit ermöglicht daher auf einfache Weise eine hochgenaue Leckageerfassung, da auch kleinste, ungewollte Fluidabflüsse erfasst werden können. Zum anderen ermöglicht sie auf ebenso einfache Weise eine präzise Erfassung eines Entnahmewunsches, kann diesen also einerseits ohne Weiteres von einer möglichen Leckage unterscheiden, wie auch, abhängig von der Ausführung des Sperrorgans, in diesem Fall eine unmittelbare Öffnung des Steuerorgans zur Ermöglichung der Entnahme möglich ist.

Bevorzugt ist die Messeinrichtung derart ausgestaltet und eingerichtet, dass sie den Hub und/oder die Geschwindigkeit der Kolbenbewegung erfasst.

Gemäß einer ersten Alternative kann vorgesehen sein, dass die Messeinheit, also die Kolbenspeichereinheit mit der Messeinrichtung dem den Fluidfluss in beide Richtungen sperrenden Sperrorgan zum Verbraucher hin nachgeschaltet ist, wobei der Kolben mit einem Zylinder, der einseitig mit der Rohrleitung kommuniziert, gegen die Rückstellkraft eines Rückstellelements bewegbar ist. Gemäß dieser Erfindungsausgestaltung ist folglich die Kolbenspeichereinheit dem Sperrorgan, gesehen in Richtung des Verbrauchers, nachgeschaltet. Das heißt, dass das Sperrorgan das Volumen zum Verbraucher hin absperren kann, in welchem Volumen die Kolbenspeichereinheit vorgesehen ist.

Die Kolbenspeichereinheit selbst weist einen Zylinder auf, der in diesen Rohrleitungsabschnitt gesetzt ist und in dem der Kolben gegen ein Rückstellelement, beispielsweise eine Schraubendruckfeder, bewegbar ist. Aufgrund des in der Rohrleitung gegebenen Basisdrucks im Zeitpunkt des Absperrens über das Sperrorgan befindet sich der Kolben in einer druckabhängigen Position, wobei er in Abhängigkeit des gegebenen Drucks das Rückstellelement entsprechend deformiert, so dass eine entsprechende Rückstellkraft aufgebaut ist. Kommt es nun aufgrund eines Lecks zu einer Druckabnahme, so bewegt sich der Kolben innerhalb des Zylinders, getrieben durch die Rückstellkraft des Rückstellelements, wobei diese Kolbenbewegung über die Messeinrichtung erfasst werden kann. Je langsamer diese Kolbenbewegung ist, umso kleiner ist zwangsläufig das Leck.

Wird während der Messdauer, wenn also die Rohrleitung über das Sperrorgan abgesperrt ist, eine Entnahmeeinrichtung betätigt, soll also Fluid entnommen werden, so kommt es hier zu einer relativ schnellen Kolbenbewegung im Zylinder, die wiederum durch die Messeinrichtung erfasst wird und abhängig von der Bewegungsgeschwindigkeit eben als Entnahmewunsch, nicht aber als Leck interpretiert wird, woraufhin über die Steuerungs- und Verarbeitungseinrichtung, wie beschrieben, das schalt- oder steuerbare Sperrorgan sofort geöffnet wird, um eine reguläre Entnahme zu ermöglichen.

Der Zylinder selbst verläuft bevorzugt vertikal zur Rohrleitung, in die er über eine Anschlussschnittstelle eingesetzt werden kann.

Das Sperrorgan selbst ist ein Ventil, insbesondere ein entsprechend schalt- oder steuerbares elektromagnetisches Ventil, das heißt, dass eine aktive, steuerbare Unterbrechung des Fluidflusses über das Sperrorgan möglich ist.

Eine alternative Ausführung zur vorstehend beschriebenen Zylinderausführung sieht demgegenüber vor, dass der Kolben in einem die Rohrleitung vor dem Sperrorgan mit der Rohrleitung hinter dem Sperrorgan verbindenden Bypass-Rohrleitungsabschnitt angeordnet ist. Bei dieser Ausgestaltung ist ein separater Bypass-Rohrleitungsabschnitt vorgesehen, in dem der Kolben beweglich aufgenommen ist. Das Sperrorgan befindet sich zwischen den Zu- und Abgängen des Bypass-Rohrleitungsabschnitts von der Rohrleitung, das heißt, dass der Bypass um das Sperrorgan herumführt. Hier wird das Volumen der Kolbenspeichereinheit umfassend den Bypass-Rohrleitungsabschnitt über den Kolben in zwei Teilvolumina unterteilt. Wird über das Sperrorgan das Fluidfluss gesperrt, so nimmt auch hier der Kolben, da eine Nullverbrauchsphase gegeben ist, im Rahmen der Leckageprüfung eine entsprechende Ausgangsposition ein, nachdem der im gesperrten Zustand im versorgerseitigen Teilvolumen mit dem Versorgungsdruck beaufschlagt wird und keine Entnahme erfolgt. Das heißt, dass mithilfe des Kolbens der Versorgungsdruck verbraucherseitig gehalten wird. Ist nun ein Leck gegeben, so setzt auch hier aufgrund des ungewollten Fluidabflusses eine Druckerniedrigung auf der Verbraucherseite ein, die zu einer Kolbenbewegung führt, die wiederum über die Messeinrichtung hochgenau erfasst werden kann. Liegt während des Prüfzyklus eine vom Verbraucher beabsichtigte Unterbrechung dieser Nullverbrauchsphase vor, will er also bewusst Fluid entnehmen, so kommt es auch hier zu einer rapiden Druckveränderung und damit zu einer schnellen Kolbenbewegung, also einer hohen Kolbengeschwindigkeit, die wiederum erfasst wird. Dies ermöglicht einerseits eine Differenzierung zwischen einem Leck und einer bewussten Entnahme. Zum anderen kann, wenn es sich bei dem Sperrorgan wiederum um ein schalt- oder steuerbares Ventil handelt, dieses unmittelbar über die zugeordnete Steuerungs- und Verarbeitungseinrichtung wieder aktiv geöffnet werden.

Bevorzugt wird ein Sperrorgan verwendet, das den Fluidfluss in beiden Richtungen sperrt. Ein solches Sperrorgan ist zweckmäßigerweise ein Ventil, insbesondere ein schalt- oder steuerbares Ventil wie ein elektromagnetisches Ventil. Alternativ ist es aber auch denkbar, ein den Fluidfluss nur in einer Richtung sperrendes Sperrorgan, beispielsweise ein Rückschlagventil, also einen einfachen Rückflussverhinderer, zu verwenden. Ein solches Sperrorgan oder ein solcher Rückflussverhinderer sperrt den Fluidstrom nur in einer Richtung, lässt also zum Verbraucher hin einen Fluidfluss zu, sperrt aber in Gegenrichtung, so dass ein Rückfluss ausgeschlossen ist. Wenn die Nullverbrauchphase gegeben ist, wird das Zurückfließen von Wasser durch den Rückflussverhinderer unterbunden, das heißt, dass die Wassermenge auf der Verbraucherseite konstant bleibt. Über die Bypass-Leitung ist eine Druckkopplung zwischen der Verbraucher- und der Versorgerseite des nur einseitig wirkenden Sperrorgans respektive Rückflussverhinderers gegeben. Dieser Effekt kann durch eine erfindungsgemäße Weiterbildung der Erfindung gesteigert werden, indem die wirksame Fläche des Kolbens auf der dem Verbraucher zugewandten Seite kleiner ist als die dem Fluidzufluss zugewandte Fläche des Kolbens. Das heißt, dass die effektive Wirkfläche des Kolbens auf dem verbraucherseitigen Teilvolumen gegenüber der Versorgerseite reduziert ist. Mit dem Flächenverhältnis der beiden Kolbenwirkflächen kann eine Druckverstärkung auf der Verbraucherseite erreicht werden, so dass Druckschwankungen, die auf der Versorgerseite, also der Zuflussseite entstehen, direkt auf die Verbraucherseite übertragen werden. Dies führt in Bezug auf den Rückflussverhinderer, also das einseitig sperrende Sperrorgan zu einer permanenten Druckkompensation, die wiederum gewährleistet, dass der Rückflussverhinderer sicher zur Versorgungseinrichtung hin abdichtet.

Darüber hinaus kann die Sperrfunktion eines solchen einseitig wirkende Sperrorgans respektive eines solchen Rückflussverhinderers auch darüber verbessert werden, dass der Kolben des Rückflussverhinderers in Richtung des Verbrauchers gegen die Rückstellkraft eines Rückstellelements bewegbar ist, das heißt, dass neben dem zusätzlich erzeugten Überdruck zusätzlich auch eine Druckfeder vorgesehen ist, die den Schließeffekt unterstützt.

Daneben besteht aber natürlich auch die Möglichkeit, dass der Kolben in dem Bypass-Rohrleitungsabschnitt frei bewegbar ist, also keine derartige Druckfeder oder Ähnliches vorgesehen ist.

Ist ein solches Rückstellelement respektive eine solche Druckfeder, beispielsweise eine Schraubendruckfeder, vorgesehen, so kann diese dazu dienen, als Rückholfeder zu agieren und den Kolben wieder in die Anfangslage zurückzubewegen, wenn dieser aufgrund einer Leckageerfassung oder einer bewussten Entnahme aus der Nulllage ausgelenkt wurde. Alternativ zu einer solchen "Rückholfeder" ist es aber auch denkbar, dass, insbesondere bei frei bewegbarem Kolben, eine dem Kolben zum Fluidzufluss hin vorgeschaltete Drossel vorgesehen ist. Über diese kann durch Nutzung des Bernoulli-Effekts auf dem versorgerseitigen Teilvolumen ein Unterdruck erzeugt werden, der den Kolben in die Anfangs- oder Nulllage wieder zurückführt.

Wird ein solcher Rückflussverhinderer, also nur ein einseitig wirkendes Sperrorgan, in Verbindung mit der Bypass-Leitung verwendet, so besteht neben der Leckageerfassung auch die Identifikationsmöglichkeit, ob es sich im Falle eines unbewussten Abflusses um ein Mikroleck oder einen Funktionsausfall des Rückflussverhinderers handelt. Das heißt, dass im Falle einer Detektion eines unbeabsichtigten Wasseraustritts auch ein Funktionstest des Rückflussverhinderers durchgeführt werden kann. Hierzu wird bei Erfassung eines ungewollten Abflusses der Fluidzufluss versorgerseitig kurzzeitig abgestellt und anschließend entweder eine Prüföffnung des über das Sperrorgan abgesperrten Rohrleitungsabschnitts geöffnet oder die Bypass-Leitung, die gegebenenfalls an eine solche Prüföffnung angeschlossen ist, dortseits entfernt. Es kommt zu einer Entleerung des abgesperrten Leitungsabschnitts, wobei jedoch der Durchfluss nach der Entleerung stoppen muss. Tritt jedoch ununterbrochen Fluid aus der Prüföffnung, so kann auf einen Funktionsausfall des Rückflussverhinderers geschlossen werden.

Erfindungsgemäß sind also unterschiedliche Ausgestaltungen der Kolbenspeichereinheit vorgesehen, entweder ein separater Zylinder mit integriertem Kolben, oder eine Bypass-Rohrleitung, in der der Kolben beweglich aufgenommen ist. Den unterschiedlichen Ausgestaltungen gleich ist jedoch die Erfassung der Kolbenbewegung mithilfe einer entsprechenden Messeinrichtung. Diese Messeinrichtung kann gemäß einer zweckmäßigen Weiterbildung der Erfindung ein mit dem Kolben gekoppeltes, durch den Kolben bewegbares und außerhalb des Zylinders oder des Bypass-Rohrabschnitts angeordnetes Messelement und eine dessen Bewegung erfassende Sensoreinrichtung aufweisen. Hier ist also ein außerhalb angeordnetes Messelement mit zugeordneter Sensoreinrichtung vorgesehen. Denkbar ist es, dass der Kolben mit einer aus dem Zylinder herausgeführten Kolbenstange verbunden ist, die selbst das Messelement bildet oder an der ein mit der Sensoreinrichtung zusammenwirkendes Messelement angeordnet ist. Alternativ ist es auch denkbar, dass der Kolben selbst mit einem radial durch den Zylinder oder den Rohrleitungsabschnitt nach außen geführten, das Messelement bildenden oder ein Messelement tragenden Abschnitt versehen ist. Es sind also unterschiedliche Ausgestaltungen denkbar, den Kolben mit einem außerhalb des Zylinders respektive der Bypass-Leitung angeordneten Messelement zu koppeln, unabhängig davon, welche Basis-Erfindungsalternative vorgesehen ist.

Die Sensoreinrichtung selbst ist in diesem Fall bevorzugt ein Linear-Potentiometer, wobei das Messelement in diesem Fall beispielsweise als Mitnehmer ausgeführt ist, der mit der Sensoreinrichtung direkt verbunden ist.

Alternativ zu einer derart ausgeführten Messeinrichtung ist es denkbar, dass die Messeinrichtung ein mit dem Kolben gekoppeltes magnetisches Element und eine dessen Bewegung erfassende, außerhalb des Zylinders oder des Bypass-Rohrleitungsabschnitts angeordnete Sensoreinrichtung aufweist. Hier erfolgt also eine berührungslose Messung über eine magnetische Kopplung. Beispielsweise können mehrere entlang des Kolbenbewegungswegs positionierte Reedschalter vorgesehen sein, die eine diskrete Erfassung des Kolbenhubs ermöglichen. Mit einer steigenden Anzahl an Reedschaltern kann die Genauigkeit der Positionserfassung des Kolbens erhöht werden. Zur Erzielung einer magnetischen Kopplung ist es erforderlich, am Kolben ein entsprechendes magnetisches Element anzuordnen.

In Weiterbildung der Erfindung ist zweckmäßigerweise eine mit der Messeinrichtung kommunizierende, deren Messsignale verarbeitende Steuerungs- und Verarbeitungseinrichtung vorgesehen. Diese ist in der Lage, anhand der Messsignale eine etwaige Leckage oder einen Zapfvorgang etc. zu erfassen. Denkbar ist beispielsweise, dass in der Steuerungs- und Verarbeitungseinrichtung entsprechende Kenn- oder Vergleichsfelder umfassend Intervalle bezüglich der Kolbenbewegungsgeschwindigkeit abgelegt werden, anhand welcher in Abhängigkeit der erfassten Messsignale die entsprechende Auswertung erfolgen kann. Die Steuerungs- und Verarbeitungseinrichtung steuert, sofern vorhanden, das entsprechende steuer- oder schaltbare Sperrorgan, also beispielsweise das elektromagnetische Ventil, um ein aktives Öffnen und Schließen des Fluidflusses vorzunehmen.

Weiterhin ist es denkbar, dass die Steuerungs- und Verarbeitungseinrichtung zur Anzeige einer erfassten Leckage mit wenigstens einem Anzeige- oder Informationsmittel gekoppelt oder koppelbar ist, beispielsweise einem entsprechendem Display oder dergleichen, wobei diese Kopplung entweder physikalisch über eine Leitung oder drahtlos über eine entsprechende Funkschnittstelle erfolgen kann. Wird seitens der Steuerungs- und Verarbeitungseinrichtung eine entsprechende Leckage erfasst, so kann hierüber eine unmittelbare Information an eine zuständige Person oder Stelle ausgegeben werden.

Neben der Leckagemesseinrichtung selbst betrifft die Erfindung ferner ein Rohrleitungssystem, umfassend wenigstens eine Leckagemesseinrichtung der beschriebenen Art. Dabei kann dieser Leckagemesseinrichtung eine wenigstens einen fluidbezogenen Messwert erfassende Zählereinrichtung vorgeschaltet sein, die der Erfassung des regulären Durchflusses respektive Verbrauchs an geführtem Fluid dient.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipdarstellung einer erfindungsgemäßen Leckagemesseinrichtung einer ersten Ausführungsform,
- Fig. 2: eine Perspektivansicht einer Kolbenspeichereinheit der Leckagemesseinrichtung aus Fig. 1,
- Fig. 3: eine Schnittansicht durch die Kolbenspeichereinheit aus Fig. 2,
- Fig. 4: eine Prinzipdarstellung einer erfindungsgemäßen Leckagemesseinrichtung einer zweiten Ausführungsform,
- Fig. 5: eine Teilschnittansicht durch einen Teil der Leckagemesseinrichtung aus Fig. 4,
- Fig. 6: eine Prinzipdarstellung einer erfindungsgemäßen Leckagemesseinrichtung einer dritten Ausführungsform, und
- Fig. 7: eine Teilschnittansicht durch einen Teil der Leckagemesseinrichtung aus Fig. 6.

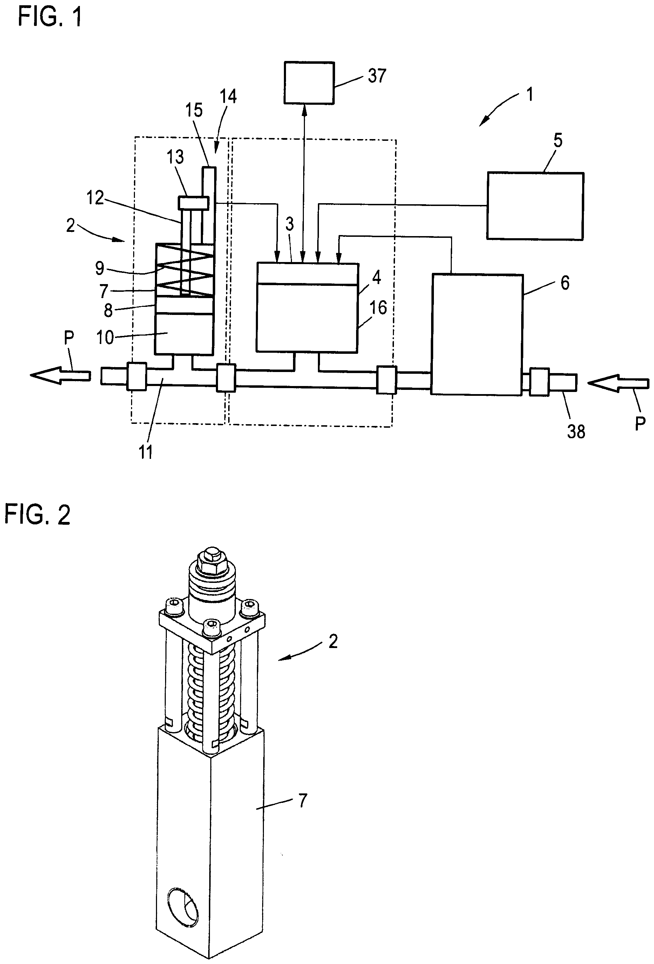

Fig. 1 zeigt eine erfindungsgemäße Leckagemesseinrichtung 1, die in eine zu einem Verbraucher führende Rohrleitung 38 eingesetzt ist, durch die, wie durch die Pfeile P dargestellt, ein Fluid, üblicherweise Wasser, strömt.

Die Leckagemesseinrichtung 1 umfasst eine Messeinheit 2, mittels welcher eine etwaige Leckage, aber auch eine beabsichtigte Fluidentnahme erfassbar ist. Vorgesehen ist des Weiteren eine Steuerungs- und Verarbeitungseinrichtung 3, ein Sperrorgan 4 sowie eine Stromversorgung 5, die mit den relevanten Bauteilen kommuniziert und insbesondere die Steuerungseinrichtung 3 sowie bei Bedarf auch das Sperrorgan 4 versorgt. Schließlich ist eine Zählereinrichtung 6 zur Erfassung des Durchflusses an Fluid durch die Rohrleitung 38 vorgesehen, beispielsweise ein Wasserzähler.

Die Messeinheit 2 umfasst bei diesem Ausführungsbeispiel einen in einem Zylinder 7 bewegbaren Kolben 8, der gegen die Rückstellkraft eines Rückstellelements 9, hier angedeutet einer Schraubendruckfeder, bewegbar ist. Der Zylinder 7 kommuniziert über ein unterhalb des Kolbens 8 befindliches Volumen 10 mit der Rohrleitung 38. Die Messeinheit 2 ist über einen entsprechenden Rohrleitungsabschnitt 11 in die Rohrleitung 38 gesetzt.

Der Kolben 8 ist mit einer Kolbenstange 12 verbunden, die aus dem Zylinder 7 herausgeführt ist und an deren Ende ein Messelement 13 angeordnet ist, das Teil einer Messeinrichtung 14 umfassend eine Sensoreinrichtung 15 ist, beispielsweise ein Linear-Potentiometer.

Das Sperrorgan 4 ist im gezeigten Beispiel ein elektromagnetisch steuerbares Ventil 16, das über die Steuerungs- und Verarbeitungseinrichtung 3 gesteuert werden kann. Es ist ebenfalls mit einem entsprechenden Anschlussabschnitt in die Rohrleitung 38 geschaltet und, gesehen in Richtung der Verbraucher, der Messeinheit 2 vorgeschaltet.

Dem Sperrorgan 5 wiederum vorgeschaltet ist die Zählereinrichtung 6, wie Fig.1 anschaulich zeigt.

Die erfindungsgemäße Leckagemesseinrichtung 1 ermöglicht ein exaktes Erfassen eines etwaigen Lecks, insbesondere auch eines Mikrolecks. Zur Leckageprüfung wird, von der Steuerungs- und Verarbeitungseinrichtung 3 gesteuert, über das Sperrorgan 4 respektive das Ventil 16 der Fluidzufluss gesperrt, das heißt, dass die Rohrleitung 38 aktiv geschlossen wird und folglich der versorgerseitige Fluidzufluss von der Gebäudewasserleitung zu den Verbrauchern hin unterbrochen ist. Diese Unterbrechung erfolgt natürlich nur, wenn im Unterbrechungszeitpunkt keine Wasserentnahme erfolgt, was über die Zählereinrichtung 6 erfasst wird, die mit der Steuerungseinrichtung 3 kommuniziert.

Im gesperrten Zustand wird die vorhandene Druckenergie innerhalb der Rohrleitung 38 in dem Leitungsabschnitt, gesehen zum Verbraucher, hinter dem Ventil 16, also in dem Abschnitt, in den die Messeinheit 2 geschaltet ist, von der Messeinheit 2, also der Kolbenspeichereinheit, aufgenommen. Abhängig vom im Absperrzeitpunkt herrschenden Druck steigt die Fluidsäule im Zylinder 7 an, der Kolben 8 nimmt im Absperrzeitpunkt eine Ausgangslage ein. Während der anstehenden Leckagemessung wird davon ausgegangen, dass eine Nullverbrauchsphase gegen ist, dass also kein aktives Zapfen erfolgt, um den Fluidstand respektive Druck im abgesperrten Volumen zu erfassen.

Ist ein Leck gegeben, so fließt ungewollt Fluid aus diesem Leck, also aus dem abgesperrten Rohrleitungsabschnitt, was dazu führt, dass der Druck im abgesperrten Rohrleitungsabschnitt sinkt. Dies führt dazu, dass mit abnehmendem Fluidvolumen auch das Volumen im Zylinder 7 respektive der Druck abnimmt. Der Kolben 7 wird über das Rückstellelement 9 aktiv, der Druckabnahme folgend, bewegt.

Diese Bewegung wird über die Messeinrichtung 14 erfasst. Im gezeigten Ausführungsbeispiel bewegt sich das Messelement 13 relativ zur Sensoreinrichtung 15, beispielsweise einem Linear-Potentiometer. Hierüber kann exakt die Kolbenbewegung erfasst werden.

Diese ist im Falle eines Lecks oder Mikrolecks natürlich sehr langsam, da abhängig von der Leckgröße nur ein relativ geringes Volumen pro Zeiteinheit ausströmt. Die Messeinrichtung 14 kommuniziert mit der Steuerungseinrichtung 3, die die Messsignale aufnimmt und auswertet. Seitens der Steuerungs- und Verarbeitungseinrichtung 3 sind beispielsweise entsprechende Kennfelder oder Vergleichstabellen mit entsprechenden Vergleichswerten abgelegt. Ergibt die Auswertung, dass ein Leck vorliegt, so kann über die Steuerungs- und Verarbeitungseinrichtung 3 an einer Anzeigeeinrichtung 37 eine entsprechende Information ausgegeben werden, wobei diese Kommunikation drahtgebunden oder drahtlos erfolgen kann.

Kommt es zu einem während der Messung eigentlich ungewollten Öffnens eines Zapfhahns oder dergleichen, also eines Verbrauchers, so ist natürlich sicherzustellen, dass dieser Entnahmewunsch auch bedient werden kann, was momentan nicht möglich ist, nachdem der Fluidzufluss über das Ventil 16 gesperrt ist. Wird eine Zapfeinrichtung geöffnet, so kommt es zu einem relativ abrupten Druckabfall im abgesperrten Rohrleitungsabschnitt, resultierend in einer relativ schnellen Kolbenbewegung. Diese wird über die Sensoreinrichtung 15 erfasst und seitens der Steuerungs- und Verarbeitungseinrichtung 3 als ein gewünschter Zapfvorgang bestimmt. In diesem Fall öffnet die Steuerungs- und Verarbeitungseinrichtung 3 umgehend das Ventil 16, so dass der Fluidzufluss wieder offen ist und die Entnahme wie gewünscht erfolgen kann.

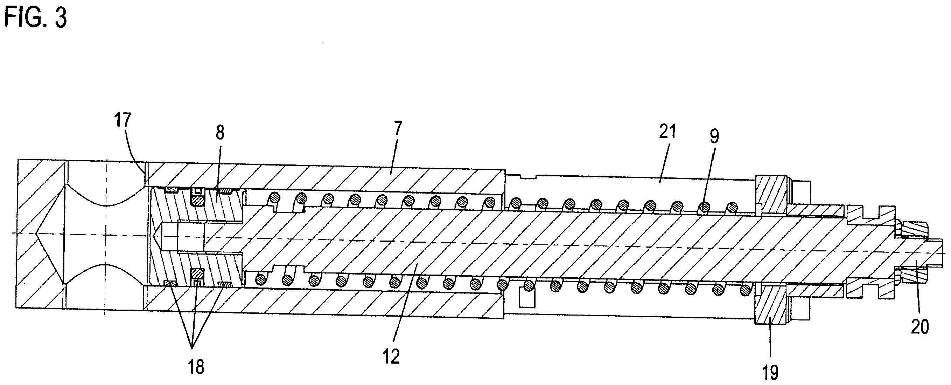

Die Fig. 2 und 3 zeigen in einer Perspektiv- und Schnittansicht die Messeinheit 2. Diese umfasst den Zylinder 7, der über entsprechende Anschlussfittings, die in eine Querbohrung 17, die gleichzeitig auch den Zufluss zum Zylinderinneren ermöglicht, eingeschraubt werden in die Rohrleitung gesetzt wird.

Im Zylinder 7, der über eine Hülse 21 verlängert ist, ist der Kolben 8 aufgenommen, der über entsprechende, medientrennende Eigenschaften aufweisende Dicht- oder Führungselemente 18 im Zylinder 7 geführt ist. An dem Kolben ist eine Kolbenstange 12 befestigt, die aus einem Zylinderdeckel 19 herausgeführt ist und an deren Ende 20 das Messelement 13 befestigt werden kann.

Am an der Hülse 21 angeordneten Zylinderdeckel 19 ist das Rückstellelement 9, hier eine Schraubenfeder, abgestützt, das andere Federende ruht am Kolben 8, so dass dieser gegen das Rückstellelement 9 bewegt werden kann. Die Kolbenstange 12 dient als Führungsdorn für das Rückstellelement.

Beim gezeigten Ausführungsbeispiel ist der Zylinder 7 über die Hülse 21 verlängert, durch die die Kolbenstange 12 sowie das Rückstellelement 9 geführt ist und an der der Deckel 19 aufsitzt. Alternativ wäre es denkbar, den Zylinder auch einteilig auszuführen, dann vorzugsweise aus Metall. Die Hülse 21 kann ebenfalls aus Metall, aber auch aus Kunststoff sein.

Abhängig von der Länge des Zylinders 7 respektive der Hülse 21 kann die Vorspannkraft des Rückstellelements 9 variiert werden. Über entsprechende Puffer oder dergleichen kann die Kolbenbewegung in die Endlagen gedämpft werden, was einer Geräuschreduzierung zuträglich ist.

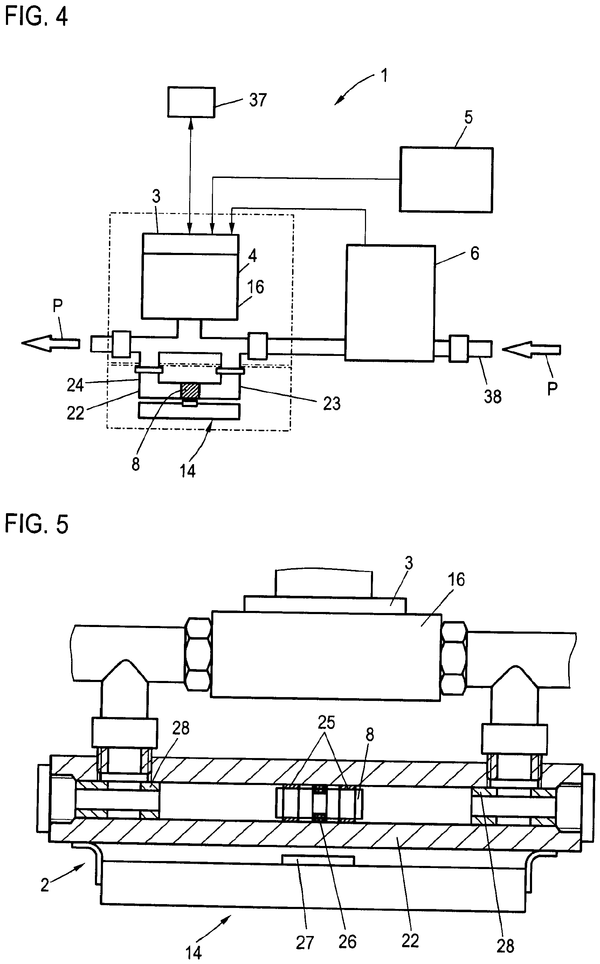

Fig. 4 zeigt eine weitere Ausgestaltung einer erfindungsgemäßen Leckagemesseinrichtung 1, wobei für gleiche Bauteile gleiche Bezugszeichen verwendet werden.

Vorgesehen ist auch hier ein Sperrorgan 4 in Form eines schaltbaren Ventils 16, sowie eine zugeordnete Steuerungs- und Verarbeitungseinrichtung 3, die das Ventil 16 steuert. Weiterhin vorgesehen ist eine Leistungsversorgung 5 sowie der die Zählereinrichtung 6. Die wesentlichen Komponenten entsprechen dem Ausführungsbeispiel gemäß Fig. 1.

Bei dieser Ausgestaltung kommt ein Bypass-Rohrleitungsabschnitt 22, in dem der Kolben 8 beweglich aufgenommen ist, zum Einsatz. Dieser Bypass-Rohrleitungsabschnitt 22 ist mit dem einen Ende 23 vor dem Ventil 16 und mit dem anderen Ende 24 hinter dem Ventil 16 in die Rohrleitung 38 geschaltet, der Bypass überbrückt also das Ventil 16.

Dem Kolben 8 zugeordnet ist auch hier eine Messeinrichtung 14, die bei diesem Ausführungsbeispiel berührungslos arbeitet.

Eine vergrößerte Darstellung der Messeinheit 2 respektive dieser Kolbenspeichereinheit ist in Fig. 5 gezeigt. Der Kolben 8 ist in dem Bypass-Rohrleitungsabschnitt 22 über entsprechende Dicht- oder Führungselemente 25 abgedichtet, jedoch nach wie vor beweglich aufgenommen. An ihm ist ein magnetisches Messelement 26 vorgesehen, dem eine entsprechende Sensoreinrichtung 27, die das Messelement 26 erfasst respektive mit ihm magnetisch gekoppelt ist, zugeordnet.

Des Weiteren sind in dem Bypass-Rohleitungsabschnitt 22 an beiden Seiten entsprechende Endanschläge 28 in Form von Gummipuffern oder Ähnlichem aufgenommen, die ein Anschlagen des Kolbens 8 in der einen oder anderen Endlage bedämpfen. Diese Anschlaghülsen oder -stopfen 28 sind beispielsweise aus Gummi oder einem entsprechenden elastischen Kunststoff.

Zur Rückholung des Kolbens 8 nach einer erfolgten Auslenkung aus der Null- oder Mittellage ist es denkbar, am versorgerseitigen Anschluss eine Drossel einzubauen, um auf diese Weise durch Nutzung des Bernoulli-Effekts auf dem versorgerseitigen Teilvolumen einen Unterdruck zu erzeugen, der den Kolben 8 wieder in Ausgangslage bewegt. Alternativ besteht die Möglichkeit, eine Rückholfeder in Form einer mechanischen Druckfeder oder Schraubenfeder im verbraucherseitigen Teilvolumen anzubringen.

Soll eine Leckagemessung erfolgen, so wird auch hier über die Steuerungs- und Verarbeitungseinrichtung 3 gesteuert, das Ventil 16 betätigt, um die Rohrleitung 38 zu sperren. Der Kolben 8, der abgedichtet in dem Bypass-Rohrleitungsabschnitt 22 aufgenommen ist, dichtet ebenfalls ein Volumen zur Verbraucherseite hin ab. Er befindet sich, wenn die Rohrleitung 38 geschlossen wird, in einer Mittenstellung, nachdem aufgrund des geschlossenen Systems ein konstanter Druck gegeben ist.

Ist nun zur Verbraucherseite hin eine Leckage gegeben, so ändert sich in diesem Rohrleitungsabschnitt und damit auch im Bypass-Rohrleitungsabschnitt 22 langsam der Druck aufgrund des sich reduzierenden Volumens. Dies führt dazu, dass der Kolben 8 je nach auslaufender Flüssigkeitsmenge seine Position verändert und sich nach links bewegt. Diese Bewegung wird über die Sensoreinrichtung 27 exakt erfasst. Die mit der Messeinrichtung 14 kommunizierende Steuerungs- und Verarbeitungseinrichtung 3 kann nun die entsprechenden Messsignale auswerten und ein etwaiges Leck erfassen und an der Anzeigeeinrichtung 16 eine Information ausgeben.

Für den Fall, dass ein bewusster Zapfvorgang erfolgen soll, kommt es zu einem schnellen Druckabbau und damit zu einer schnellen Kolbenbewegung, die ebenfalls erfasst wird. Hierüber kann die Steuerungs- und Verarbeitungseinrichtung 3 einen gewollten Zapfvorgang erfassen. Um diesen zu ermöglichen wird umgehend wieder das Ventil 16 angesteuert und der Fluidfluss geöffnet, so dass der normale, gewollte Zapfvorgang stattfinden kann. In diesem Fall ist die Leckagemessung natürlich zunächst beendet, kann nachfolgend aber wieder aufgenommen werden.

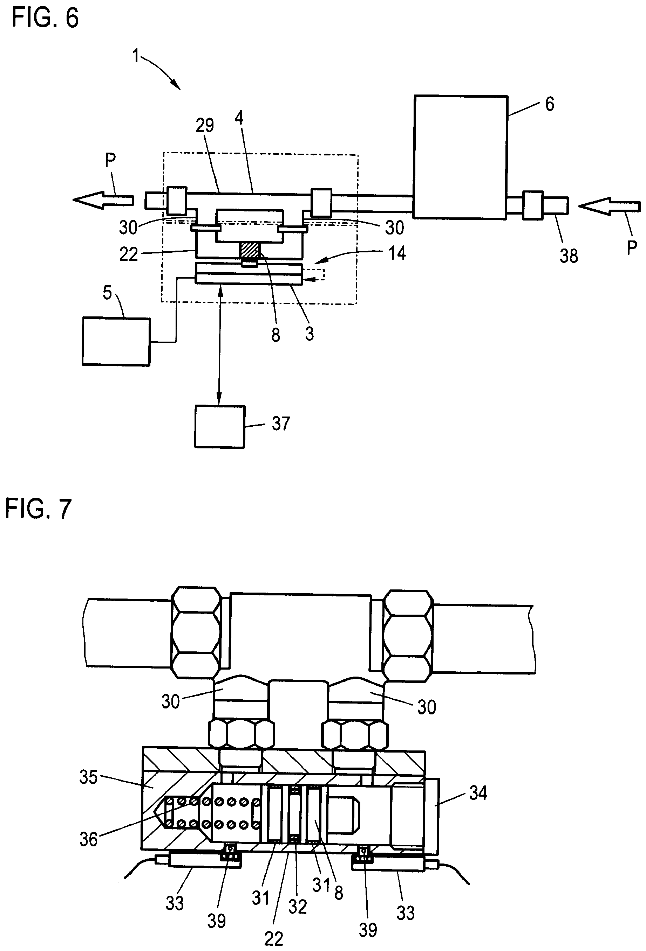

Die Fig. 6 und 7 zeigen schließlich eine dritte Ausführungsform einer erfindungsgemäßen Leckageeinrichtung 1, wobei wiederum für gleiche Bauteile gleiche Bezugszeichen verwendet werden.

Auch hier ist in die Rohrleitung 38 ein Sperrorgan 4 hier in Form eines Rückflussverhinderers 29, also eines einseitig wirkenden Ventils, geschaltet, welchem Rückflussverhinderer 29 die Zählereinrichtung 6 vorgeschaltet ist.

An entsprechenden Anschlussabschnitten 30 des Rückflussverhinderers 29 ist auch hier ein Bypass-Rohrleitungsabschnitt 22 angeschlossen, in dem wiederum der Kolben 8 längsbeweglich aufgenommen ist. Über eine entsprechende Messeinrichtung 14 kann auch hier die Kolbenbewegung erfasst und die Messwerte an eine entsprechende Steuerungs- und Verarbeitungseinrichtung 3 gegeben werden, die diese auswertet und ein etwaiges Leck detektiert. Es ist also auch hier eine Kolbenspeichereinheit vorgesehen, die letztlich im Grundaufbau der aus den Fig. 4 und 5 ähnlich ist.

Wie Fig. 7 zeigt, ist hier der Kolben 8 im Bypass-Rohrleitungsabschnitt 22 über entsprechende Dicht- oder Führungselemente 31 abgedichtet geführt. Er verfügt über ein magnetisches Messelement 32, das wiederum berührungslos über eine Sensoreinrichtung 33, die hier zweiteilig ausgeführt ist, erfasst werden kann, worüber die Kolbenbewegung ermittelt wird.

Die Bypass-Rohrleitung 22 ist an einer Seite über eine Abschlussschraube 34 geschlossen. An der anderen Seite ist eine Dichthülse oder -stopfen 35 aufgenommen, an der ein Rückstellelement 36, auch hier exemplarisch eine Schraubendruckfeder, abgestützt ist. Gegen dieses Rückstellelement 36 ist der Kolben 8 bewegbar, das heißt, dass über dieses Rückstellelement 36 der Kolben stets in eine definierte Ausgangsposition zurückgeführt werden kann.

Auch hier kommt also eine Kolbenspeichereinheit in Verbindung mit einem druckbetätigten Ventil in Form eines Rückflussverhinderers 29 zum Einsatz. Die Kolbenspeichereinheit besteht aus einem Bypass-Rohrleitungsabschnitt 22, dessen Volumen durch den Kolben in zwei Teilvolumina unterteilt ist. Im Fall einer Nullverbrauchsphase wird das Zurückfließen von Fluid durch den Rückflussverhinderer 29 unterbunden, so dass die Wassermenge auf der Verbraucherseite konstant bleibt. Es ist also eine Druckkopplung zwischen der Verbraucher- und der Versorgerseite des Rückflussverhinderers 29 über die Bypass-Leitung 22 gegeben. Um sicherzustellen, dass im Fall eines abrupten Druckanstieges auf der Versorgerleitung der Rückflussverhinderer 29 nicht öffnet, kann die effektive Wirkfläche des Kolbens 8 auf dem verbraucherseitigen Teilvolumen gegenüber der Versorgerseite reduziert werden. Mit dem Flächenverhältnis der Kolbenwirkflächen kann eine Druckverstärkung auf der Verbraucherseite erreicht werden, das heißt, dass Druckschwankungen auf der Versorgerseite direkt auf die Verbraucherseite übertragen werden können. In Bezug auf den Rückflussverhinderer 29 ist demzufolge eine permanente Druckkompensation gegeben. Die Sperrfunktion des Rückflussverhinderers 29 wird neben dem auf diese Weise erzeugten Unterdruck zusätzlich natürlich über die darin enthaltene Druckfeder, die hier nicht näher gezeigt ist, sichergestellt.

Auch hier hält der Kolben 8 den Versorgungsdruck verbraucherseitig. Wird eine Kolbenbewegung detektiert, resultierend aus einem etwaigen Leck, was seitens der Steuerungs- und Verarbeitungseinrichtung 3 erfasst wird, so kann daraus entweder auf ein Leck oder auf einen Funktionsausfall des Rückflussverhinderers 29 geschlossen werden. Die Kolbenbewegung wird wie beschrieben über die entsprechende Sensoreinrichtung 33, also die beiden Positionsaufnehmer, erfasst und entsprechend seitens der Steuerungs- und Verarbeitungseinrichtung 3 ausgewertet. Im Falle einer Leckage wird dem Verbraucher oder einer zuständigen Stelle auch hier über die drahtgebundene oder drahtlos angekoppelte Anzeigeeinrichtung 37 mitgeteilt.

Wird nun verbraucherseitig eine Zapfstelle betätigt, so ermöglicht der Rückflussverhinderer 29 aufgrund des verbraucherseitigen Druckabfalls, dass versorgerseitig Fluid zum Verbraucher nachfließen kann. Findet dieser Vorgang während eines Prüfzyklus statt, der intermittierend nach vorgegebenen Zeitintervallen erfolgt, so wird über die dann auch hier gegebene hohe Kolbengeschwindigkeit dieser Entnahmevorgang erfasst. Es wird also mithin erkannt, dass es sich um eine beabsichtigte Wasserentnahme handelt und demzufolge ein Leck ausgeschlossen werden kann. Eine Versorgung ist ohne weiteres möglich, da der Rückflussverhinderer 29 innerhalb sehr kurzer Zeit eine Flussfreigabe ermöglicht.

Neben der Erfassung eines etwaigen Lecks an sich kann aber auch über eine Erfassung des Druckabfalls über die Zeit respektive des ausströmenden Fluidvolumens über die Zeit eine qualitative Information zum Leckageverhalten und damit letztlich zur Größe des Lecks gewonnen werden, was möglicherweise für die Art und Weise der bei Erfassung eines Lecks einzuleitenden Maßnahmen von Vorteil ist. Diese Druckmessung ist vor allem bei der Ausführung mit vertikalem Kolbenprinzip gemäß den Fig. 1 - 3 zweckmäßig. Darüber hinaus erleichtert sie die Kalibrierung bei der Erstinbetriebnahme.

Der Rückflussverhinderer kann beispielsweise ein Standardbauteil sein, entsprechend DIN-EN 13959, wobei diese natürlich keine abschließende Aufzählung ist. An die Prüföffnungen 39 eines solchen Rückflussverhinderers 29 wird der Bypass-Rohrleitungsabschnitt 22 mittels entsprechender Schraubstutzen verschraubt.

Um auch hier eine verbraucherseitige Druckverstärkung zu erzielen, besteht die Möglichkeit, die effektive Wirkfläche des Kolbens auf der Verbraucherseite gegenüber der Versorgerseite zu reduzieren, so dass über das entstehende Flächenverhältnis verbraucherseitig stets ein entsprechender Überdruck sichergestellt werden kann und somit der Rückflussverhinderer 29 stets in die Schließstellung gedrängt wird, auch wenn versorgerseitig eine Druckschwankung gegeben sein sollte.

Das Ausführungsbeispiel zeigt die Kolbenbewegungserfassung über eine berührungslose magnetische Kopplung. Seitens der Sensoreinrichtung 33 können entsprechende Reedschalter vorgesehen sein, die längs des Verfahrweges des Kolbens angeordnet sind und eine hinreichende Positionsauflösung ermöglichen.

Alternativ wäre es auch denkbar, beispielsweise aus der Dichthülse 35 eine Kolbenstange herauszuführen und an dieser beispielsweise, ähnlich wie bei dem Ausführungsbeispiel gemäß der Fig. 1 - 3, ein Messelement anzubringen, das mit einem berührenden Wegmesssystem, wie beispielsweise dem Linear-Potentiometer, als Sensoreinrichtung zusammenwirkt.

Die Rückholung des Kolbens kann über das Rückstellelement 36 erfolgen. Zusätzlich oder alternativ kann auch versorgerseitig eine Drossel eingebaut werden, um auf diese Weise durch Nutzung des Bernoulli-Effekts an dem versorgerseitigen Teilvolumen einen Unterdruck zu erzeugen, der den Kolben wieder in die Ausgangslage zurückholt.

Über eine sich im versorgerseitigen Teilvolumen befindliche, über eine Schraube geschlossene Prüföffnung 39, kann darüber hinaus eine Funktionskontrolle des Rückflussverhinderers erfolgen. Im Falle einer Detektion eines unbeabsichtigten Wasseraustritts kann es sich entweder um ein Leck handeln, oder um eine Fehlfunktion des Rückflussverhinderers 29. Erfasst die Steuerungs- und Verarbeitungseinrichtung 3 einen ungewollten Wasserausfluss, so kann, um sicherzustellen, dass es sich nicht um einen Fehler des Rückflussverhinderers 29 handelt, die Prüföffnung 39 nach vorherigem Absperren des Flüssigkeitszuflusses von der Versorgerseite her die Prüföffnung 39 geöffnet werden. Es kommt zu einem Ausfluss des Fluids des abgesperrten Leitungsabschnitts, der jedoch nach Entleerung desselben stoppen müsste. Fließt jedoch nach wie vor noch Wasser weiter, so kann daraus auf einen Funktionsausfall des Rückflussverhinderers 29 geschlossen werden.

### Bezugszeichenliste

- 1: Leckagemesseinrichtung
- 2: Messeinheit
- 3: Steuerungs- und Verarbeitungseinrichtung
- 4: Sperrorgan
- 5: Stromversorgung
- 6: Zählereinrichtung
- 7: Zylinder
- 8: Kolben
- 9: Rückstellelement
- 10: Volumen
- 11: Rohrleitungsabschnitt
- 12: Kolbenstange
- 13: Messelement
- 14: Messeinrichtung
- 15: Sensoreinrichtung
- 16: Ventil
- 17: Querbohrung
- 18: Dicht- oder Führungselement
- 19: Zylinderdeckel
- 20: Ende
- 21: Hülse
- 22: Bypass-Rohrleitungsabschnitt
- 23: Ende
- 24: Ende
- 25: Messelement
- 26: Messelement
- 27: Sensoreinrichtung
- 28: Endanschlag
- 29: Rückflussverhinderer
- 30: Anschlussabschnitt
- 31: Dicht- oder Führungselement
- 32: Messelement
- 33: Sensoreinrichtung
- 34: Abschlussschraube
- 35: Dichthülse
- 36: Rückstellelement
- 37: Anzeige- oder Informationsmittel
- 38: Rohrleitung
- 39: Prüföffnung

## Patentansprüche

1. Leckagemesseinrichtung zum Einsetzen in eine ein Fluid von einem Fluidzufluss zu wenigstens einem Verbraucher führende Rohrleitung (38), umfassend ein Sperrorgan (4) zum Sperren des Fluidflusses in wenigstens einer Fließrichtung sowie eine Messeinheit (2) umfassend einen in einem Rohrabschnitt bewegbaren, vom Fluid druckbeaufschlagten Kolben (8) mit einer zugeordneten, die Kolbenbewegung erfassenden Messeinrichtung (14).

2. Leckagemesseinrichtung nach Anspruch 1, **dadurch gekennzeichnet, dass** die Messeinrichtung (14) zur Erfassung des Hubs und/oder der Geschwindigkeit der Kolbenbewegung ausgestaltet und eingerichtet ist.

3. Leckagemesseinrichtung nach Anspruch 1 oder 2, **dadurch gekennzeichnet, dass** die Messeinheit (2) dem den Fluidfluss in beide Richtungen sperrenden Sperrorgan (4) zum Verbraucher hin nachgeschaltet ist, wobei der Kolben (8) in einem Zylinder (7), der einseitig mit der Rohrleitung (38) kommuniziert, gegen die Rückstellkraft eines Rückstellelements (9) bewegbar ist, wobei das Sperrorgan (4) vorzugsweise ein Ventil (16), insbesondere ein elektromagnetisches Ventil, ist.

4. Leckagemesseinrichtung nach Anspruch 3, **dadurch gekennzeichnet, dass** der Zylinder (7) vertikal zur Rohrleitung (38), in die er über eine Anschlussschnittstelle einsetzbar ist, verläuft.

5. Leckagemesseinrichtung nach Anspruch 1 oder 2, **dadurch gekennzeichnet, dass** der Kolben (8) in einem die Rohrleitung (38) vor dem Sperrorgan (4) mit der Rohrleitung (38) hinter dem Sperrorgan (4) verbindenden Bypass-Rohrleitungsabschnitt (22) angeordnet ist.

6. Leckagemesseinrichtung nach Anspruch 5, **dadurch gekennzeichnet, dass** das Sperrorgan (4) den Fluidfluss in beide Richtungen oder nur in Richtung des Fluidzuflusses sperrt, wobei vorzugsweise vorgesehen ist, dass das Sperrorgan (4) ein Ventil (16), insbesondere ein elektromagnetisches Ventil, ist oder dass das Sperrorgan (4) ein nur in einer Richtung sperrendes Rückschlagventil (29) ist.

7. Leckagemesseinrichtung nach Anspruch 5 oder 6, **dadurch gekennzeichnet, dass** der Kolben (8) in dem Bypass-Rohrleitungsabschnitt (22) frei bewegbar ist oder in Richtung des Verbrauchers gegen die Rückstellkraft eines Rückstellelements (36) bewegbar ist.

8. Leckagemesseinrichtung nach einem der Ansprüche 5 bis 7, **dadurch gekennzeichnet, dass** die wirksame Fläche des Kolbens (8) auf der dem Verbraucher zugewandten Seite kleiner ist als die dem Fluidzufluss zugewandte Fläche des Kolbens (8).

9. Leckagemesseinrichtung nach einem der Ansprüche 5 bis 8, **dadurch gekennzeichnet, dass** insbesondere bei frei bewegbarem Kolben (8) eine dem Kolben (8) zum Fluidzufluss hin vorgeschaltete Drossel vorgesehen ist.

10. Leckagemesseinrichtung nach einem der vorangehenden Ansprüche, **dadurch gekennzeichnet, dass** die Messeinrichtung (14) ein mit dem Kolben (8) gekoppeltes, durch den Kolben (8) bewegbares und außerhalb des Zylinders (7) oder des Bypass-Rohrleitungsabschnitts (22) angeordnetes Messelement (13) und eine dessen Bewegung, insbesondere Bewegungshub und/oder Bewegungsgeschwindigkeit, erfassende Sensoreinrichtung (14), insbesondere ein Linear-Potentiometer, aufweist.

11. Leckagemesseinrichtung nach Anspruch 10, **dadurch gekennzeichnet, dass** der Kolben (8) mit einer aus dem Zylinder (7) oder dem Bypass-Rohrleitungsabschnitt (22) herausgeführten Kolbenstange (12) verbunden ist, die selbst das Messelement (13) bildet oder an der ein mit der Sensoreinrichtung (14) zusammenwirkendes Messelement (13) angeordnet ist, oder dass der Kolben (8) selbst einen radial durch den Zylinder (7) oder den Bypass-Rohrleitungsabschnitt (22) nach außen geführten, das Messelement (13) bildenden oder ein Messelement (13) tragenden Abschnitt aufweist.

12. Leckagemesseinrichtung nach einem der Ansprüche 1 bis 9, **dadurch gekennzeichnet, dass** die Messeinrichtung (14) ein mit dem Kolben (8) gekoppeltes magnetisches Element (26, 32) und eine dessen Bewegung, insbesondere Bewerbungshub und/oder Bewegungsgeschwindigkeit, erfassende, außerhalb des Zylinders (7) oder des Bypass-Rohrleitungsabschnitts (22) angeordnete Sensoreinrichtung (14) aufweist.

13. Leckagemesseinrichtung nach einem der vorangehenden Ansprüche, **dadurch gekennzeichnet, dass** eine mit der Messeinrichtung (14) kommunizierende, deren Messsignale verarbeitende Steuerungs- und Verarbeitungseinrichtung (3) vorgesehen ist, wobei vorzugsweise vorgesehen ist, dass die Steuerungs- und Verarbeitungseinrichtung (3) zur Anzeige einer erfassten Leckage mit wenigstens einem Anzeige- oder Informationsmittel (37) gekoppelt oder koppelbar ist.

14. Rohrleitungssystem, umfassend wenigstens eine Leckagemesseinrichtung (1) nach einem der vorangehenden Ansprüche.

15. Rohrleitungssystem nach Anspruch 14, **dadurch gekennzeichnet, dass** der Leckagemesseinrichtung (1) eine wenigstens einen fluidbezogenen Messwert erfassende Zählereinrichtung (6) vorgeschaltet ist.
